# EUROPEAN PATENT APPLICATION

(11) **EP 4 832 298 A1**
(43) Date of publication of application: **28.10.2026**
(21) Application number: 25853752.1
(22) Date of filing: 18.07.2025
(51) Int. Cl.: H02J 7/00, B60L 53/00

(54) **CHARGING CONTROL METHOD AND SYSTEM FOR ELECTRIC VEHICLE**

(30) Priority: 13.08.2024 CN 202411108587
(71) Applicant: Chery Automobile Co., Ltd., Wuhu, Anhui 241006 (CN)
(72) Inventor: ZHANG, Fan, Wuhu, Anhui 241006 (CN); ZHANG, Yaming, Wuhu, Anhui 241006 (CN); ZHAO, Ya, Wuhu, Anhui 241006 (CN)
(74) Representative: Adamson Jones
(86) International application number: PCT/CN2025/109433
(87) International publication number: WO 2026/037056

(57) **Abstract**

A charging control method and system for an electric vehicle, relating to the technical field of intelligent vehicles. The method comprises: receiving a first charging cut-off SOC (S1); on the basis of the first charging cut-off SOC, acquiring indication information, the indication information indicating whether the first charging cut-off SOC is valid (S2); on the basis of the first charging cut-off SOC, the indication information, and a charging threshold, acquiring a second charging cut-off SOC (S3); comparing the second charging cut-off SOC and the SOC of a battery in the process of charging the battery by means of a whole-vehicle control unit, and, on the basis of a comparison result, controlling a charging operation performed by the whole-vehicle control unit on the battery (S4); when the whole-vehicle control unit stops charging the battery, controlling the battery to enter a continuous discharging state; and determining whether the battery satisfies a recharging condition after discharging, and if the battery satisfies the recharging condition after discharging, charging the battery by means of the whole-vehicle control unit (S5).

## Description

The present disclosure claims priority to Chinese Patent Application No. 202411108587.8, filed on August 13, 2024, and entitled "CHARGING CONTROL METHOD AND SYSTEM FOR ELECTRIC VEHICLE," the entire content of which is incorporated herein by reference.

### TECHNICAL FIELD

The present disclosure pertains to the technical field of intelligent vehicles and relates to a charging control method and a charging control system for an electric vehicle.

### BACKGROUND

With the changes of times, electric vehicles have gradually come into the public eye. Due to their advantages such as cleanliness, environmental friendliness, and low noise, electric vehicles are bound to become a mainstream transportation tool in the future. At the same time, the power storage of on-board batteries of electric vehicles has also become a focus of public discussion. Therefore, during travel with electric vehicles, how to conduct charging management for the electric vehicles to prolong battery life has become an important research topic. A state of charge (SOC) of a battery is an important parameter representing the remaining power capacity of a battery pack, and whether the SOC estimation is accurate directly affects the performance of electric vehicles.

### SUMMARY

The purpose of the present disclosure is to address the issues in the prior art where the instrument display SOC powers down quickly, electric vehicles frequently prompt for charging, and the display does not reflect the actual battery level. A charging control method and a charging control system for an electric vehicle are provided.

To achieve the above objectives, the present disclosure adopts the following technical solutions.

The present disclosure proposes a charging control method for an electric vehicle, performed by the electric vehicle, which includes a vehicle control unit and a battery. The method includes: receiving a first charging cut-off state of charge (SOC), where the first charging cut-off SOC is an SOC at which charging of the battery is cut off and is configured via an instrument panel; obtaining indication information based on the first charging cut-off SOC, where the indication information indicates whether the first charging cut-off SOC is valid; obtaining a second charging cut-off SOC based on the first charging cut-off SOC, the indication information and a charging threshold, where the second charging cut-off SOC is an SOC at which charging of the battery is cut off and is used by the vehicle control unit; comparing the second charging cut-off SOC with an SOC of the battery during a charging operation performed by the vehicle control unit on the battery; and controlling, based on a comparison result, the charging operation performed by the vehicle control unit on the battery; and controlling the battery to enter a continuous discharging state in response to the vehicle control unit stopping the charging operation on the battery; determining whether the battery satisfies a recharging condition after discharging; and charging the battery via the vehicle control unit in response to the condition being satisfied.

Preferably, obtaining the second charging cut-off SOC based on the first charging cut-off SOC, the indication information and the charging threshold includes: obtaining, in response to the indication information indicating that the first charging cut-off SOC is invalid, a second charging cut-off SOC corresponding to a case where the first charging cut-off SOC is invalid; or determining, in response to the indication information indicating that the first charging cut-off SOC is valid, whether the first charging cut-off SOC is greater than the charging threshold; obtaining, in response to the first charging cut-off SOC being less than the charging threshold, a second charging cut-off SOC corresponding to a case where the first charging cut-off SOC is less than the charging threshold; and obtaining, in response to the first charging cut-off SOC being greater than the charging threshold and based on the first charging cut-off SOC, a second charging cut-off SOC corresponding to a case where the first charging cut-off SOC is greater than the charging threshold.

Preferably, the indication information includes: first indication information indicating that the first charging cut-off SOC is invalid, and second indication information indicating that the first charging cut-off SOC is valid. Obtaining the indication information based on the first charging cut-off SOC includes: obtaining the first indication information in response to a signal of the first charging cut-off SOC being 0x0:Not_Active, 0xFE:Abnormal, or 0xFF:Invalid. Obtaining, in response to the indication information indicating that the first charging cut-off SOC is invalid, the second charging cut-off SOC corresponding to the case where the first charging cut-off SOC is invalid includes: determining a memorized value as the second charging cut-off SOC in response to obtaining the first indication information, where the memorized value is a charging cut-off SOC received by the vehicle control unit in a previous ignition cycle.

Preferably, obtaining, in response to the first charging cut-off SOC being less than the charging threshold, the second charging cut-off SOC corresponding to the case where the first charging cut-off SOC is less than the charging threshold includes: determining a default value or a memorized value as the second charging cut-off SOC in response to the first charging cut-off SOC being less than the charging threshold, where the default value is a factory-preset charging cut-off SOC, and the memorized value is a charging cut-off SOC received by the vehicle control unit in a previous ignition cycle.

Preferably, obtaining, based on the first charging cut-off SOC, the second charging cut-off SOC corresponding to the case where the first charging cut-off SOC is greater than the charging threshold includes: determining a sum of the first charging cut-off SOC and 0.9 as the second charging cut-off SOC in response to the first charging cut-off SOC being less than 99; determining a sum of the first charging cut-off SOC and 0.4 as the second charging cut-off SOC in response to the first charging cut-off SOC being 99; or determining the first charging cut-off SOC as the second charging cut-off SOC in response to the first charging cut-off SOC being 100.

Preferably, controlling, based on the comparison result, the charging operation performed by the vehicle control unit on the battery includes: maintaining, by the vehicle control unit, the charging operation on the battery in response to the second charging cut-off SOC being greater than the SOC of the battery; or stopping, by the vehicle control unit, the charging operation on the battery in response to the second charging cut-off SOC being not greater than the SOC of the battery.

Preferably, determining whether the battery satisfies the recharging condition after the discharging includes: in response to the charging gun being not unplugged and the vehicle control unit being not in a sleep state: determining, by the vehicle control unit, whether the battery satisfies the recharging condition in response to the SOC of the battery being not greater than a difference between the first charging cut-off SOC and 0.9; and refraining from responding, by the vehicle control unit, to a charging request in response to the SOC of the battery being greater than the difference between the first charging cut-off SOC and 0.9; and in response to the charging gun being re-plugged or the vehicle control unit being awakened from the sleep state: determining, by the vehicle control unit, whether the battery satisfies the recharging condition in response to the SOC of the battery being less than the first charging cut-off SOC.

Preferably, determining, by the vehicle control unit, whether the battery satisfies the recharging condition includes: obtaining the indication information based on the first charging cut-off SOC; obtaining the second charging cut-off SOC based on the first charging cut-off SOC, the indication information and the charging threshold; and comparing the second charging cut-off SOC with the SOC of the battery, and controlling, based on the comparison result, the charging operation performed by the vehicle control unit on the battery.

A charging control system for electric vehicles is proposed in the present disclosure, which includes: an information receiving module, configured to receive a first charging cut-off state of charge (SOC), where the first charging cut-off SOC is an SOC at which charging of the battery is cut off and is configured via an instrument panel; a first determining module, configured to: based on the first charging cut-off SOC, obtain indication information indicating whether the first charging cut-off SOC is valid; and based on the first charging cut-off SOC, the indication information and a charging threshold, obtain a second charging cut-off SOC, where the second charging cut-off SOC is an SOC at which charging of the battery is cut off and is used by the vehicle control unit; a second determining module, configured to: compare the second charging cut-off SOC with an SOC of the battery during a charging operation performed by the vehicle control unit on the battery; and based on a comparison result, control the charging operation performed by the vehicle control unit on the battery; and a third determining module, configured to: in response to the vehicle control unit stopping the charging operation on the battery, control the battery to enter a continuous discharging state; determine whether the battery satisfies a recharging condition after discharging; and in response to the battery satisfying the recharging condition, charge the battery via the vehicle control unit.

A terminal device is proposed, including: a memory, a processor, and a computer program stored in the memory and runnable on the processor. The processor, when running the computer program, is configured to perform steps of the charging control method for the electric vehicle mentioned above.

The present disclosure proposes a charging control method for an electric vehicle. Accurate control of the charging of the battery can be achieved by setting a charging cut-off SOC via an instrument panel and performing a series of determinations and comparisons, thereby avoiding overcharging or undercharging, and extending the service life of the battery. Effectively determining the relationship between the charging cut-off SOC and the charging threshold allows stopping the charging operation at an appropriate time, thereby avoiding unnecessary energy waste and improving the charging efficiency. Obtaining the charging cut-off SOC values of the vehicle control unit under different situations and comparing the charging cut-off SOC values with the actual SOC of the battery helps fully utilize the battery capacity and optimize the battery performance. In this way, a charging cycle where the vehicle system repeatedly performs charging and charging termination operations due to a rapid power drop shown on the instrument panel can be avoided, and the present disclosure is easy to be implemented without complex programming, which can effectively improve the life and the health of the battery and allow for safer charging, thereby reducing vehicle operating costs, ensuring the stability of the electric vehicle, and enhancing the driving experience and the safety of the electric vehicle.

### BRIEF DESCRIPTION OF DRAWINGS

To more clearly describe the technical solutions in the embodiments of the present disclosure, the accompanying drawings required for the embodiments will be briefly introduced below. It should be understood that the following accompanying drawings show only some embodiments of the present disclosure, and therefore should not be considered as limiting the scope. For those of ordinary skill in the art, other relevant drawings can be obtained based on these drawings without creative effort.
FIG. 1 is a schematic flowchart of a charging control method for an electric vehicle according to the present disclosure.
FIG. 2 is a schematic structural diagram of a charging control system for an electric vehicle according to the present disclosure.
FIG. 3 is a schematic structural diagram of an electronic device according to the present disclosure.

### DETAILED DESCRIPTION

To make the objectives, technical solutions, and advantages of the embodiments of the present disclosure clearer, the technical solutions in the embodiments of the present disclosure will be described clearly and comprehensively below in conjunction with the accompanying drawings. Obviously, the described embodiments are a part of the embodiments of the present disclosure, not all of them. Generally, the components in the embodiments of the present disclosure described and illustrated in the accompanying drawings can be arranged and designed in various different configurations.

Therefore, the following detailed description of the embodiments of the present disclosure shown in the accompanying drawings is not intended to limit the scope of the claimed invention, but merely represents selected embodiments of the present disclosure. All other embodiments obtained by those skilled in the art based on the embodiments of the present disclosure without creative effort fall within the protection scope of the present disclosure.

It should be noted that similar numerals and letters indicate similar items in the following figures. Therefore, once an item is defined in a figure, it does not need to be further defined and explained in subsequent figures.

In the description of embodiments of the present disclosure, it should be noted that the terms "upper", "lower", "horizontal", "inner", etc., indicating orientation or positional relationships, are based on the orientation or positional relationships shown in the accompanying drawings, or the orientation or positional relationships customarily adopted when the product of the present disclosure is used. These terms are only used to facilitate the description of the present disclosure and simplify the description, and do not indicate or imply that the devices or components referred to must have a specific orientation, be constructed or operated in a specific orientation. Therefore, they cannot be understood as limitations on the present disclosure. Furthermore, terms such as "first", "second", etc., are only used for distinction in description and cannot be understood as indicating or implying relative importance.

In addition, the term "horizontal" does not necessarily mean that the component must be absolutely horizontal, but can be slightly tilted. For example, "horizontal" simply refers to its direction being more horizontal relative to "vertical", rather than indicating that the structure must be completely horizontal, but can be slightly tilted.

In the description of the embodiments of the present disclosure, it should also be noted that unless otherwise explicitly specified and limited, the terms "disposed", "mounted", "connected with", and "connected to" should be broadly interpreted. For example, they can be fixed connections, detachable connections, or integrally connected; they can be mechanical connections or electrically connected; they can be directly connected or indirectly connected through an intermediate medium, and they can be interconnected within two components. For those skilled in the art, the specific meaning of the aforementioned terms in the present disclosure can be understood based on the specific circumstances.

Existing electric vehicles (EVs) stop charging when the battery reaches a set cut-off state of charge (SOC), but the SOC displayed on the instrument drops quickly, leading to frequent recharging of EVs and thereby compromising customer charging experience.

The present disclosure will be further described in detail below with reference to the accompanying drawings.

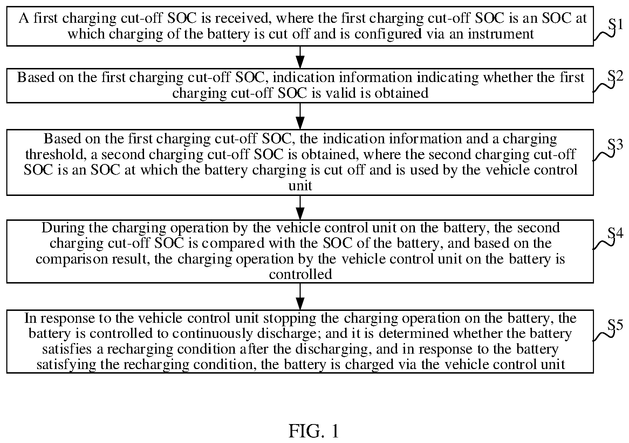

The present disclosure proposes a charging control method for an electric vehicle, as shown in FIG. 1. The method is performed by a vehicle, which includes a vehicle control unit and a battery. The method includes the following steps.

In step S1, a first charging cut-off SOC is received, where the first charging cut-off SOC is an SOC at which charging of the battery is cut off and is configured via an instrument panel.

In some embodiments of the present disclosure, a user can set the state of charge (SOC) at which the charging of the battery is cut off via the instrument on the car, that is, to set a percentage of charging at which the charging of the battery is stopped when the percentage of charging is reached during the charging. The first charging cut-off SOC corresponds to a power level at which charging of the battery is stopped and is set by the user via an instrument panel of the vehicle. That is, during a subsequent charging process of the battery, in a case where the power level of the battery reaches the first charging cut-off SOC, the charging is stopped. This step S1 corresponds to receiving instruction information based on the set charging cut-off SOC via the instrument.

In step S2, based on the first charging cut-off SOC, indication information indicating whether the first charging cut-off SOC is valid is obtained.

In step S3, based on the first charging cut-off SOC, the indication information and a charging threshold, a second charging cut-off SOC is obtained, where second charging cut-off SOC is an SOC at which charging of the battery is cut off and is used by the vehicle control unit.

In some embodiments of the present disclosure, after the vehicle receives the first charging cut-off SOC set by the user via the instrument, it is necessary to determine whether the first charging cut-off SOC is valid and determine a magnitude relationship between the first charging cut-off SOC and the charging threshold. Different second charging cut-off SOC values are determined based on whether the first charging cut-off SOC is valid and the magnitude relationship between the first charging cut-off SOC and the charging threshold. The second charging cut-off SOC is the charging cut-off SOC used by the vehicle control unit. When the battery is subsequently charged through the vehicle control unit, it is to be determined whether to maintain the charging operation on the battery or stop the charging operation on the battery based on the second charging cut-off SOC. The charging threshold may be any numerical value. For example, the charging threshold is 80, which is 80% of the battery capacity. When the battery of the vehicle is to be charged, the user needs to insert the charging gun into the charging port of the vehicle. After that, with the charging gun inserted, the vehicle controls how the battery is charged through the vehicle control unit. For example, the vehicle control unit is capable of controlling when to close the charging circuit of the battery, so that the battery can be charged when the charging circuit is closed; the vehicle control unit is also capable of controlling when to open the charging circuit of the battery, so that the battery can be stopped from charging when the charging circuit is open; and the vehicle control unit is also capable of detecting the SOC of the battery in real time to determine the current power level of the battery.

In some embodiments of the present disclosure, the aforementioned steps S2 and S3 correspond to: based on the instruction information for the set charging cut-off SOC, determining whether the instruction information for the charging cut-off SOC is valid and the relationship between the first charging cut-off SOC and the charging threshold, so as to obtain the charging cut-off SOC values of the vehicle control unit under different conditions.

In some embodiments, determining whether the instruction information for the charging cut-off SOC is valid and the relationship between the first charging cut-off SOC and the charging threshold is as follows. In response to that the instruction information for the set charging cut-off SOC is determined to be invalid, a charging cut-off SOC of the vehicle control unit corresponding to the case where the charging cut-off SOC is invalid is obtained. In a case where the instruction information is valid, it is determined whether the charging cut-off SOC is greater than the charging threshold; in a case where the charging cut-off SOC is less than the charging threshold, the charging cut-off SOC of the vehicle control unit corresponding to the case where the charging cut-off SOC is less than the charging threshold is obtained; and in a case where the charging cut-off SOC is greater than the charging threshold and based on the set charging cut-off SOC, the charging cut-off SOC of the vehicle control unit corresponding to the case where the charging cut-off SOC is greater than the charging threshold is obtained. That is, based on the first charging cut-off SOC, the indication information and the charging threshold, obtaining the second charging cut-off SOC, includes: in response to the indication information indicating that the first charging cut-off SOC is invalid, obtaining a second charging cut-off SOC corresponding to the case where the first charging cut-off SOC is invalid; or, in response to the indication information indicating that the first charging cut-off SOC is valid, determining whether the first charging cut-off SOC is greater than the charging threshold; in response to the first charging cut-off SOC being less than the charging threshold, obtaining a second charging cut-off SOC corresponding to the case where the first charging cut-off SOC is less than the charging threshold; and in response to the first charging cut-off SOC being greater than the charging threshold and based on the first charging cut-off SOC, obtaining a second charging cut-off SOC corresponding to the case where the first charging cut-off SOC is greater than the charging threshold.

In some embodiments of the present disclosure, when the first charging cut-off SOC is invalid, there is no need to determine the magnitude relationship between the first charging cut-off SOC and the charging threshold. Instead, the second charging cut-off SOC in the invalid case may be directly obtained. When the first charging cut-off SOC is valid, it is required to determine the magnitude relationship between the first charging cut-off SOC and the charging threshold, and obtain different second charging cut-off SOC values based on the magnitude relationship. In this way, strategies for obtaining charging cut-off SOC corresponding to the vehicle control unit are separately set for various different situations, so as to ensure that the finally obtained charging cut-off SOC matches the current situation of the vehicle, thereby ensuring the accuracy of the obtained charging cut-off SOC. In this way, accurate control of the battery charging can be subsequently achieved.

Optionally, in response to that the instruction information for setting the charging cut-off SOC is determined to be invalid, the charging cut-off SOC of the vehicle control unit corresponding to the case where the charging cut-off SOC is invalid is obtained as follows. When a signal of the charging cut-off SOC is 0x0:Not_Active, 0xFE:Abnormal, or 0xFF:Invalid, it is determined that the charging cut-off SOC is invalid, and a value of the current charging cut-off SOC of the vehicle control unit to be equal to a memorized value, where the memorized value is a power-off storage value received by the vehicle control unit in a previous ignition cycle, ranging from 80 to 100. That is, the indication information includes first indication information and second indication information, where the first indication information indicates that the first charging cut-off SOC is invalid, and the second indication information indicates that the first charging cut-off SOC is valid. Based on the first charging cut-off SOC, obtaining the indication information includes: in response to the signal of the first charging cut-off SOC being 0x0:Not_Active, 0xFE:Abnormal, or 0xFF:Invalid, obtaining the first indication information. In response to the indication information indicating that the first charging cut-off SOC is invalid, obtaining the second charging cut-off SOC corresponding to the case where the first charging cut-off SOC is invalid, includes: in response to obtaining the first indication information, determining the memorized value as the second charging cut-off SOC, where the memorized value is the charging cut-off SOC received by the vehicle control unit in the previous ignition cycle.

In some embodiments of the present disclosure, after the user sets the first charging cut-off SOC via the instrument of the vehicle, in a case where the first charging cut-off SOC received by the vehicle is 0x0:Not_Active, 0xFE:Abnormal, or 0xFF:Invalid, it indicates that the first charging cut-off SOC set by the user via the instrument is invalid. In this case, the charging cut-off SOC used by the vehicle control unit during the previous ignition cycle is used as the charging cut-off SOC for the current cycle, so as to ensure that the vehicle control unit can accurately control the charging process of the battery subsequently, while ensuring that the power level of the battery when the charging is stopped satisfies the user, thereby guaranteeing the user experience.

Optionally, the charging cut-off SOC of the vehicle control unit in the case where the charging cut-off SOC is less than the charging threshold is obtained as follows. In response to the value of the charging cut-off SOC satisfies a range of: 0 < charging cut-off SOC < 80, it is determined that the value of the current charging cut-off SOC of the vehicle control unit is a default value or a memorized value, where the default value is 100, which is a factory-preset value. That is, in response to the first charging cut-off SOC being less than the charging threshold, obtaining the second charging cut-off SOC corresponding to the case where the first charging cut-off SOC is less than the charging threshold, includes: in response to the first charging cut-off SOC being less than the charging threshold, determining the default value or the memorized value as the second charging cut-off SOC, where the default value is a factory-preset charging cut-off SOC, and the memorized value is a charging cut-off SOC received by the vehicle control unit in a previous ignition cycle.

In some embodiments of the present disclosure, the charging threshold corresponds to the minimum power level required to be reached when the battery is charged. When the first charging cut-off SOC is valid, it is necessary to consider the magnitude relationship between the first charging cut-off SOC and the charging threshold. In a case where the first charging cut-off SOC is less than the charging threshold, it indicates that the charging cut-off SOC set by the user is less than the minimum power level required to be reached when the battery is charged. In a case where the battery is charged based on the first charging cut-off SOC, frequent charging may occur due to the low power level of the battery. Therefore, a default value or a memorized value is determined as the second charging cut-off SOC, so that the subsequent vehicle control unit can subsequently control the charging process of the battery based on the default value or the memorized value. This can achieve accurate control of the charging of the battery and avoid overcharging or undercharging, and thereby extending the service life of the battery.

Optionally, based on the set charging cut-off SOC, the charging cut-off SOC of the vehicle control unit in the case where the charging cut-off SOC is greater than the charging threshold is obtained as follows. When the value of the charging cut-off SOC satisfies a range of: 80 ≤ charging cut-off SOC ≤ 100, the value of the current charging cut-off SOC of the vehicle control unit is obtained as follows: when the set charging cut-off SOC is less than 99, the charging cut-off SOC of the vehicle control unit is determined to be equal to a sum of the set charging cut-off SOC and 0.9; when the set charging cut-off SOC is 99, the charging cut-off SOC of the vehicle control unit is determined to be equal to a sum of the set charging cut-off SOC and 0.4; when the set charging cut-off SOC is 100, the charging cut-off SOC of the vehicle control unit is determined to be equal to the set charging cut-off SOC, and when the charging cut-off SOC of the vehicle control unit is not less than the actual SOC of the battery, the vehicle control unit stops the charging. That is, based on the first charging cut-off SOC, obtaining the second charging cut-off SOC corresponding to the case where the first charging cut-off SOC is greater than the charging threshold, includes: in response to the first charging cut-off SOC being less than 99, determining a sum of the first charging cut-off SOC and 0.9 as the second charging cut-off SOC; in response to the first charging cut-off SOC being 99, determining a sum of the first charging cut-off SOC and 0.4 as the second charging cut-off SOC; and in response to the first charging cut-off SOC being 100, determining the first charging cut-off SOC as the second charging cut-off SOC. Here, 99 refers to 99% of the battery capacity, 0.9 refers to 0.9% of the battery capacity, 0.4 refers to 0.4% of the battery capacity, and 100 refers to 100% of the battery capacity.

In some embodiments of the present disclosure, the charging threshold corresponds to the minimum power level required to be reached when the battery is charged. When the first charging cut-off SOC is valid, it is necessary to determine the magnitude relationship between the first charging cut-off SOC and the charging threshold, and in a case where the first charging cut-off SOC is greater than the charging threshold, the second charging cut-off SOC is determined by fine-tuning the first charging cut-off SOC, where the first charging cut-off SOC is fine-tuned in combination with a set reference charging SOC (i.e., 99), so as to ensure that the finally obtained second charging cut-off SOC matches the current situation of the vehicle, thereby ensuring the accuracy of the obtained charging cut-off SOC for the subsequent accurate control of the charging of the battery.

In step S4, during a charging operation performed by the vehicle control unit on the battery, the second charging cut-off SOC is compared with the SOC of the battery, and based on the comparison result, the charging operation performed by the vehicle control unit on the battery is controlled.

In some embodiments of the present disclosure, during the charging operation performed by the vehicle control unit on the battery, an actual SOC of the battery is obtained through the vehicle control unit to compare the second charging cut-off SOC with the actual SOC of the battery, thereby determining whether the power level of the battery reaches the set charging cut-off level (i.e., the second charging cut-off SOC). In a case where the actual power level of the battery reaches the second charging cut-off SOC, the vehicle control unit stops the charging operation on the battery; and in a case where the actual power level of the battery does not reach the second charging cut-off SOC, the vehicle control unit maintains the charging operation on the battery, thereby ensuring an accurate control of the battery charging.

In some embodiments of the present disclosure, the aforementioned step S4 corresponding to: comparing charging cut-off SOC values of the vehicle control unit under different conditions with the actual SOC of the battery, so as to determine whether the vehicle control unit maintains the charging.

In some embodiments, the charging cut-off SOC values of the vehicle control unit under different conditions are compared with the actual SOC of the battery to determine whether the vehicle control unit maintains the charging, which is as follows. When the instruction information for the set charging cut-off SOC is invalid, the charging cut-off SOC of the vehicle control unit is determined to be a memorized value, and when the memorized value is not less than the actual SOC of the battery, the vehicle control unit stops the charging operation on the battery; and when the memorized value is less than the actual SOC of the battery, the vehicle control unit maintains the charging. When the value of the charging cut-off SOC satisfies a range of: 0 < charging cut-off SOC < 80, the charging cut-off SOC of the vehicle control unit is determined to be either the memorized value or the default value, and when the memorized value or the default value is not less than the actual SOC of the battery, the vehicle control unit stops the charging. That is, controlling, based on the comparison result, the charging operation performed by the vehicle control unit on the battery, includes: in response to the second charging cut-off SOC being greater than the SOC of the battery, maintaining, by the vehicle control unit, the charging operation on the battery; or in response to the second charging cut-off SOC being not greater than the SOC of the battery, stopping, by the vehicle control unit, the charging operation on the battery.

In some embodiments of the present disclosure, the second charging cut-off SOC is determined based on the first charging cut-off SOC, the indication information, and the charging threshold. Consequently, the second charging cut-off SOC determined under different conditions may vary. For example, the second charging cut-off SOC may be the default value, the memorized value, or a value obtained after the first charging cut-off SOC is fine-tuned. Regardless of the condition under which the second charging cut-off SOC is determined, during the charging operation performed by the vehicle control unit on the battery, the actual power level of the battery is detected in real-time and compared with the second charging cut-off SOC, so as to determine whether the power level of the battery is sufficient, thereby determining whether to maintain the charging operation on the battery to ensure the accurate control of the charging of the battery.

In step S5, in response to the vehicle control unit stopping the charging operation on the battery, the vehicle control unit controls the battery to continuously discharge; and it is determined whether the battery satisfies a recharging condition after the discharging, and in response to the battery satisfying the recharging condition, the battery is charged through the vehicle control unit.

In some embodiments of the present disclosure, the recharging condition refers to a condition that is required to be satisfied by the battery of the vehicle to recharge the battery after charging is stopped. Stopping the charging operation performed by the vehicle control unit on the battery indicates the end of the charging of the battery, and subsequently, the battery enters a continuous discharging state. That is, when not charged, the battery continuously discharges, so that the power level of the battery gradually decreases. In a case where the battery satisfies the recharging condition after the discharging, the battery is recharged through the vehicle control unit, which ensures that the battery always has a sufficient power level and also reduces the charging frequency of the battery.

In some embodiments of the present disclosure, the aforementioned step S5 corresponds to: when the charging cut-off SOC of the vehicle control unit is reached, the battery continuously discharges, and it is determined whether the battery satisfies the recharging condition after the discharging. In a case where the condition is satisfied, the charging through the vehicle control unit is started; otherwise, the charging through the vehicle control unit is not started.

In some embodiments, whether the battery satisfies the recharging condition after the discharging is determined as follows. When the charging gun is not unplugged and the vehicle control unit is not in a sleep state: when the actual SOC of the battery is not greater than a difference between the set charging cut-off SOC and 0.9, the vehicle control unit determines the charging condition and whether to perform the charging; when the actual SOC of the battery is greater than the difference between the set charging cut-off SOC and 0.9, the vehicle control unit refrains from responding to a charging request; and when the charging gun is re-plugged or the vehicle control unit is awakened from the sleep state, when the SOC of the battery is less than the first charging cut-off SOC, the vehicle control unit determines the charging condition and whether to perform the charging. That is, determining whether the battery satisfies the recharging condition after the discharging includes: in response to the charging gun being not unplugged and the vehicle control unit being not in the sleep state: in response to the SOC of the battery being not greater than the difference between the first charging cut-off SOC and 0.9, determining, by the vehicle control unit, whether the battery satisfies the recharging condition; and in response to the SOC of the battery being greater than the difference between the first charging cut-off SOC and 0.9, refraining from responding, by the vehicle control unit, to a charging request; and in response to the charging gun being re-plugged or the vehicle control unit being awakened from the sleep state: in response to the SOC of the battery being less than the first charging cut-off SOC, determining, by the vehicle control unit, whether the battery satisfies the recharging condition. Here, 0.9 refers to 0.9% of the battery capacity.

In some embodiments of the present disclosure, the user can insert the charging gun into the vehicle to charge the battery of the vehicle via the charging gun. After the charging gun is inserted into the car, the battery is charged through the vehicle control unit according to the above steps S1 to S4. When the power level of the battery reaches the second charging cut-off SOC, the charging is stopped, however, at this time, the user may not have unplugged the charging gun. After the charging of the battery is completed and the battery enters a continuous discharge state, the vehicle control unit does not detect whether the battery satisfies the recharging condition in real time. Instead, the vehicle control unit determines whether the battery satisfies the recharging condition only when a remaining power level of the batter satisfies a certain condition, which can reduce power consumption of the battery by the vehicle control unit.

In some embodiments of the present disclosure, after the charging gun is inserted into the vehicle, the battery is charged through the vehicle control unit according to the above steps S1 to S4. When the power level of the battery reaches the second charging cut-off SOC and the charging operation is stopped, the user may pull out the charging gun. Subsequently, the user may insert the charging gun into the vehicle again, indicating that the user still wishes to charge the vehicle. Alternatively, after the vehicle is parked, the vehicle control unit may enter the sleep state, during which the vehicle control unit is disabled. However, when the vehicle control unit is awakened from the sleep state, that is, when the vehicle control unit is awakened, the vehicle control unit is enabled to control the battery of the vehicle. In this case, after the charging of the battery is completed and the battery enters a continuous discharge state, the vehicle control unit does not detect whether the battery satisfies the recharging condition in real time. Instead, the vehicle control unit determines whether the battery satisfies the recharging condition only when the remaining power level of the battery satisfies a certain condition, which can reduce power consumption of the battery by the vehicle control unit.

In some embodiments of the present disclosure, after the charging of the battery is completed, it is necessary to consider the relationship between the charging gun and the vehicle, as well as the state of the vehicle control unit. Under different conditions, timing for the vehicle control unit to determine whether the battery satisfies the recharging condition varies. By fully considering effects of the relationship between the charging gun and the vehicle as well as the state of the vehicle control unit on the vehicle charging, an accurate control of the charging of the battery can be achieved. At the same time, the power consumption of the battery can be reduced as much as possible in a non-charging state, thereby reducing a power consumption rate of the battery and reducing the charging frequency of the battery.

Optionally, the charging condition are determined as follows. Based on the instruction information for the set charging cut-off SOC, whether the instruction information for the charging cut-off SOC is valid and the relationship between the charging cut-off SOC and the charging threshold are determined, so as to obtain charging cut-off SOC values of the vehicle control unit under different conditions. The charging cut-off SOC values of the vehicle control unit under different conditions are compared with the actual SOC of the battery to determine whether to maintain the charging through the vehicle control unit. That is, determining, by the vehicle control unit, whether the battery satisfies the recharging condition, includes: based on the first charging cut-off SOC, obtaining the indication information; based on the first charging cut-off SOC, the indication information and the charging threshold, obtaining the second charging cut-off SOC; and comparing the second charging cut-off SOC with the SOC of the battery, and controlling, based on the comparison result, the charging operation performed by the vehicle control unit on the battery.

In some embodiments of the present disclosure, the process of determining whether the battery satisfies the recharging condition through the vehicle control unit is similar to the aforementioned steps S2-S4, which will not be repeated here.

In some embodiments of the present disclosure, accurate control of the charging of the battery can be achieved by setting a charging cut-off SOC via an instrument panel and performing a series of determinations and comparisons, thereby avoiding overcharging or undercharging, and extending the service life of the battery. Effectively determining the relationship between the charging cut-off SOC and the charging threshold allows stopping the charging operation at an appropriate time, thereby avoiding unnecessary energy waste and improving the charging efficiency. Obtaining the charging cut-off SOC values of the vehicle control unit under different situations and comparing the charging cut-off SOC values with the actual SOC of the battery helps fully utilize the battery capacity and optimize the battery performance. In this way, a charging cycle where the vehicle system repeatedly enters charging and charging termination states due to a rapid power drop shown on the instrument panel can be avoided, and the present disclosure is easy to be implemented without complex programming, which can effectively improve the life and the health of the battery and allow for safer charging, thereby reducing vehicle operating costs, ensuring the stability of the electric vehicle, and enhancing the driving experience and the safety of the electric vehicle.

The method is described in detail below.

The present disclosure involves three input signals and one output signal. a is an input signal representing an instrument-displayed SOC (integer type) and is used only for display to the user; b is an input signal representing an instrument-set charging cut-off SOC (integer type); c is an input signal representing an actual SOC of the battery (accuracy to two decimal places); and d is an output signal representing the charging cut-off SOC of the vehicle control unit. When the user performs an adjustment on the instrument panel to set the charging cut-off SOC, b is sent to the vehicle control unit. When the vehicle control unit receives b, in a case where 0 < b < 80, the vehicle control unit does not respond to the current set value and performs the charging based on an initial default value or a memorized value. In a case where b is 0x0:Not_Active, 0xFE:Abnormal, or 0xFF:Invalid, the vehicle control unit performs the charging based on the memorized value, with the initial default value of the VCU (vehicle control unit) being 100. In a case where 80 ≤ b ≤ 100, different d values are determined based on c (actual SOC of the battery) according to the following logic.

When b < 99, d = b + 0.9; when b = 99, d = b + 0.4; when b = 100, d = b; and when d≥c, the vehicle control unit stops the charging operation.

When the vehicle control unit reaches the charging cut-off SOC, the battery continuously discharges, and it is determined whether the battery satisfies the recharging condition after the discharging. In a case where the battery satisfies the recharging condition, the vehicle control unit starts the charging; otherwise, the vehicle control unit does not start the charging.

In a case where the charging gun is not unplugged and the vehicle control unit is not in the sleep state: when the actual SOC of the battery is not greater than a difference between the set charging cut-off SOC and 0.9, the vehicle control unit determines the charging condition and whether to perform the charging; and when the actual SOC of the battery is greater than the difference between the set charging cut-off SOC and 0.9, the vehicle control unit refrains from responding to the charging request. In a case where the charging gun is re-plugged or the vehicle control unit is awakened from the sleep state: when the actual SOC of the battery is less than the set charging cut-off SOC, the vehicle control unit determines the charging condition and whether to perform the charging.

The charging condition is determined as follows: based on the instruction information for the set charging cut-off SOC, whether the instruction information for the charging cut-off SOC is valid and the relationship between the first charging cut-off SOC and the charging threshold are determined, so as to obtain charging cut-off SOC values of the vehicle control unit under different conditions; and the charging cut-off SOC values of the vehicle control unit under different conditions are compared with the actual SOC of the battery to determine whether the vehicle control unit maintains the charging.

### Embodiment 2

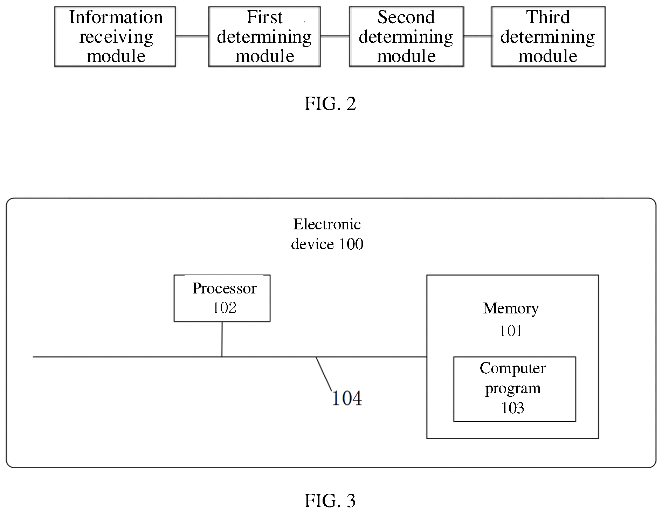

A charging control system for an electric vehicle is proposed in the present disclosure, as shown in FIG. 2. The charging control system includes an information receiving module, a first determining module, a second determining module and a third determining module.

The information receiving module is configured to receive instruction information for a set charging cut-off SOC via an instrument panel. That is, the information receiving module is configured to receive a first charging cut-off SOC, where the first charging cut-off SOC the first charging cut-off SOC is an SOC at which charging of the battery is cut off and is configured via an instrument panel.

The first determining module is configured to: based on the instruction information for the set charging cut-off SOC, determine whether the instruction information for the charging cut-off SOC is valid and the relationship between the set charging cut-off SOC and the charging threshold, so as to obtain charging cut-off SOC values of the vehicle control unit under different conditions. That is, the first determining module is configured to: based on the first charging cut-off SOC, obtain indication information indicating whether the first charging cut-off SOC is valid; and based on the first charging cut-off SOC, the indication information and a charging threshold, obtain the second charging cut-off SOC, where second charging cut-off SOC is an SOC at which the charging of the battery is cut off and is used by the vehicle control unit.

Whether the instruction information for the charging cut-off SOC is valid and the relationship between the set charging cut-off SOC and the charging threshold are determined as follows. When the instruction information for the set charging cut-off SOC is determined to be invalid, the charging cut-off SOC of the vehicle control unit corresponding to a case where the charging cut-off SOC is invalid is obtained; when the instruction information is valid, it is determined that whether the charging cut-off SOC is greater than the charging threshold; in a case where the charging cut-off SOC is less than the charging threshold, the charging cut-off SOC of the vehicle control unit corresponding to a case where the charging cut-off SOC is less than the charging threshold is obtained; and in a case where the charging cut-off SOC is greater than the charging threshold, the charging cut-off SOC of the vehicle control unit corresponding to a case where the charging cut-off SOC is greater than the charging threshold is obtained based on the set charging cut-off SOC. That is, based on the first charging cut-off SOC, the indication information and the charging threshold, obtaining the second charging cut-off SOC, includes: in response to the indication information indicating that the first charging cut-off SOC is invalid, obtaining a second charging cut-off SOC corresponding to a case where the first charging cut-off SOC is invalid; or in response to the indication information indicating that the first charging cut-off SOC is valid, determining whether the first charging cut-off SOC is greater than the charging threshold; in response to the first charging cut-off SOC being less than the charging threshold, obtaining a second charging cut-off SOC corresponding to a case where the first charging cut-off SOC is less than the charging threshold; and in response to the first charging cut-off SOC being greater than the charging threshold and based on the first charging cut-off SOC, obtaining a second charging cut-off SOC corresponding to a case where the first charging cut-off SOC is greater than the charging threshold.

When the instruction information for the set charging cut-off SOC is determined to be invalid, the charging cut-off SOC of the vehicle control unit corresponding to the case where the charging cut-off SOC is invalid is obtained as follows. When the signal of the charging cut-off SOC is 0x0:Not_Active, 0xFE:Abnormal, or 0xFF:Invalid, it is determined that the charging cut-off SOC is invalid and the value of the current charging cut-off SOC of the vehicle control unit is determined to be equal to a memorized value, where the memorized value is a stored power-off value received by the vehicle control unit in a previous ignition cycle, ranging from 80 to 100. That is, the indication information includes first indication information and second indication information, where the first indication information indicates that the first charging cut-off SOC is invalid, and the second indication information indicates that the first charging cut-off SOC is valid. Based on the first charging cut-off SOC, obtaining the indication information, includes: in response to a signal of the first charging cut-off SOC being 0x0:Not_Active, 0xFE:Abnormal, or 0xFF:Invalid, obtaining the first indication information; and in response to the indication information indicating that the first charging cut-off SOC is invalid, obtaining the second charging cut-off SOC corresponding to the case where the first charging cut-off SOC is invalid, includes: in response to obtaining the first indication information, determining a memorized value is determined as the second charging cut-off SOC, where the memorized value is a charging cut-off SOC received by the vehicle control unit in a previous ignition cycle.

The charging cut-off SOC of the vehicle control unit corresponding to the case where the charging cut-off SOC is less than the charging threshold is obtained as follows. When the value of the charging cut-off SOC satisfies a range of: 0 < charging cut-off SOC < 80, the value of the charging cut-off SOC of the vehicle control unit in the current situation is determined to be either the default value or the memorized value, where the default value is 100 and is a factory-preset value. That is, in response to the first charging cut-off SOC being less than the charging threshold, obtaining the second charging cut-off SOC corresponding to the case where the first charging cut-off SOC is less than the charging threshold, includes: in response to the first charging cut-off SOC being less than the charging threshold, determining a default value or a memorized value as the second charging cut-off SOC, where the default value is a factory-preset charging cut-off SOC, and the memorized value is a charging cut-off SOC received by the vehicle control unit in a previous ignition cycle.

Based on the set charging cut-off SOC, the charging cut-off SOC of the vehicle control unit corresponding to the case where the charging cut-off SOC is greater than the charging threshold is obtained as follows. When the value of the charging cut-off SOC satisfies a range of: 80 ≤ charging cut-off SOC ≤ 100, the value of the current charging cut-off SOC of the vehicle control unit in the situation is determined as follows: in a case where the set charging cut-off SOC is less than 99, the charging cut-off SOC of the vehicle control unit is determined to be equal to a sum of the set charging cut-off SOC and 0.9; in a case where the set charging cut-off SOC is 99, the charging cut-off SOC of the vehicle control unit is determined to be equal to a sum of the set charging cut-off SOC and 0.4; in a case where the set charging cut-off SOC is 100, the charging cut-off SOC of the vehicle control unit is determined to be equal to the set charging cut-off SOC; and in a case where the charging cut-off SOC of the vehicle control unit is not less than the actual SOC of the battery, the vehicle control unit stops the charging operation. That is, based on the first charging cut-off SOC, obtaining the second charging cut-off SOC corresponding to the case where the first charging cut-off SOC is greater than the charging threshold, includes: in response to the first charging cut-off SOC being less than 99, determining a sum of the first charging cut-off SOC and 0.9 as the second charging cut-off SOC; in response to the first charging cut-off SOC being 99, determining a sum of the first charging cut-off SOC and 0.4 as the second charging cut-off SOC; and in response to the first charging cut-off SOC being 100, determining the first charging cut-off SOC as the second charging cut-off SOC. Here, 99 refers to 99% of the battery capacity, 0.9 refers to 0.9% of the battery capacity, 0.4 refers to 0.4% of the battery capacity, and 100 refers to 100% of the battery capacity.

The second determining module is configured to compare the charging cut-off SOC values of the vehicle control unit under different conditions with the actual SOC of the battery to determine whether the vehicle control unit maintains the charging. That is, during the charging operation performed by the vehicle control unit on the battery, the second charging cut-off SOC is compared with the SOC of the battery; and the charging operation performed by the vehicle control unit on the battery is controlled based on the comparison result.

The charging cut-off SOC values of the vehicle control unit under different conditions are compared with the actual SOC of the battery to determine whether the vehicle control unit maintains the charging, which is as follows. When the instruction information for the set charging cut-off SOC is invalid, the charging cut-off SOC of the vehicle control unit is determined to be the memorized value; when the memorized value is not less than the actual SOC of the battery, the vehicle control unit stops the charging operation on the battery; when the memorized value is less than the actual SOC of the battery, the vehicle control unit maintains the charging; when the value of the charging cut-off SOC satisfies the range of: 0 < charging cut-off SOC < 80, the charging cut-off SOC of the vehicle control unit is determined to be the memorized value or the default value, and when the memorized value or the default value is not less than the actual SOC of the battery, the vehicle control unit stops the charging. That is, controlling, based on the comparison result, the operation performed by the vehicle control unit on the battery, includes: in response to the second charging cut-off SOC being greater than the SOC of the battery, maintaining, by the vehicle control unit, the charging operation on the battery; or in response to the second charging cut-off SOC being not greater than the SOC of the battery, stopping, by the vehicle control unit, the charging operation on the battery.

The third determining module determines whether the battery satisfies the recharging condition after the discharging, in response to the vehicle control unit reaching the charging cut-off SOC and the battery continuously discharging. In a case where the battery satisfies the recharging condition, the vehicle control unit starts the charging; in a case where the battery does not satisfy the recharging condition, the vehicle control unit does not start the charging. That is, the third determining module is configured to: in response to the vehicle control unit stopping the charging operation on the battery, control the battery to continuously discharge; determine whether the battery satisfies a recharging condition after discharging; and in response to the battery satisfying the recharging condition, charge the battery via the vehicle control unit.

Whether the battery satisfies the recharging condition after the discharging is determined as follows. When the charging gun is not unplugged and the vehicle control unit is not in a sleep state, in a case where the actual SOC of the battery is not greater than a difference between the set charging cut-off SOC and 0.9, the vehicle control unit determines the charging condition and whether to perform the charging; in a case where the actual SOC of the battery is greater than the difference between the set charging cut-off SOC and 0.9, the vehicle control unit refrains from responding to a charging request; and when the charging gun is re-plugged or the vehicle control unit is awakened from the sleep state, in a case where the actual SOC of the battery is less than the set charging cut-off SOC, the vehicle control unit determines the charging condition and whether to perform the charging. That is, determining whether the battery satisfies the recharging condition after the discharging, includes: in response to the charging gun being not unplugged and the vehicle control unit being not in a sleep state: in response to the SOC of the battery being not greater than a difference between the first charging cut-off SOC and 0.9, determining, by the vehicle control unit, whether the battery satisfies the recharging condition; and in response to the SOC of the battery being greater than the difference between the first charging cut-off SOC and 0.9, refraining from responding, by the vehicle control unit, to a charging request; and in response to the charging gun being re-plugged or the vehicle control unit being awakened from the sleep state: in response to the SOC of the battery being less than the first charging cut-off SOC, determining, by the vehicle control unit, whether the battery satisfies the recharging condition. Here, 0.9 represents 0.9% of the battery capacity.

The charging condition is determined as follows. Based on the instruction information for the set charging cut-off SOC, whether the instruction information for the charging cut-off SOC is valid and the relationship between the instruction information and the charging threshold are determined, so as to obtain charging cut-off SOC values of the vehicle control unit under different conditions. The charging cut-off SOC values of the vehicle control unit under different conditions are compared with the actual SOC of the battery to determine whether the vehicle control unit maintains the charging. That is, determining, by the vehicle control unit, whether the battery satisfies the recharging condition, includes: based on the first charging cut-off SOC, obtaining the indication information; based on the first charging cut-off SOC, the indication information and the charging threshold, obtaining the second charging cut-off SOC; and comparing the second charging cut-off SOC with the SOC of the battery, and based on the comparison result, controlling the charging operation performed by the vehicle control unit on the battery.

The present disclosure proposes a charging control system for an electric vehicle, which achieves the charging control of the electric vehicle by dividing the system into the information receiving module, the first determining module, the second determining module, and the third determining module. Adopting a modular design concept enables the modules to be independent of each other, thereby facilitating unified management of the modules.

### Embodiment 3

Referring to FIG. 3, the present disclosure further provides an electronic device 100 used for a charging control method of an electric vehicle. The electronic device 100 includes: a memory 101, at least one processor 102, a computer program 103 stored in the memory 101 and runnable on the at least one processor 102, and at least one communication bus 104.

The memory 101 can be used to store the computer program 103. The processor 102 implements the steps of the charging control method for the electric vehicle in Embodiment 1 by running or executing the computer program stored in the memory 101 and calling the data stored in the memory 101. The memory 101 may mainly include a storage program area and a storage data area. The storage program area can store an operating system, application programs required for at least one function (such as sound playback function, image playback function, etc.), etc. The storage data area can store data (such as audio data) created based on the use of the electronic device 100, etc. In addition, the memory 101 may include non-volatile memory, such as a hard disk, a memory, a plug-in hard disk, a Smart Media Card (SMC), a Secure Digital (SD) card, a flash card, at least one magnetic disk storage device, a flash memory device, or other non-volatile solid-state storage devices.

At least one processor 102 may be a Central Processing Unit (CPU), or it may also be other general-purpose processors, Digital Signal Processors (DSPs), Application Specific Integrated Circuits (ASICs), Field-Programmable Gate Arrays (FPGAs), or other programmable logic devices, discrete gate or transistor logic devices, discrete hardware components, etc. The processor 102 may be a microprocessor or any conventional processor. The processor 102 serves as the control center of the electronic device 100, connecting various parts of the entire electronic device 100 through various interfaces and circuits.

The memory 101 in the electronic device 100 stores a plurality of instructions to perform the charging control method for the electric vehicle, and the processor 102 can run these instructions to achieve the following operations.

Instruction information for a charging cut-off SOC set via an instrument panel is received. That is, a first charging cut-off state of charge is received, where the first charging cut-off SOC is an SOC at which charging of the battery is cut off and is configured via an instrument panel.

Based on the set instruction information for the charging cut-off SOC, it is determined whether the instruction information for the charging cut-off SOC is valid and the relationship between the instruction information and the charging threshold, so as to obtain the charging cut-off SOC values of the vehicle control unit under different conditions. That is, based on the first charging cut-off SOC, indication information indicating whether the first charging cut-off SOC is valid is obtained; based on the first charging cut-off SOC, the indication information, and a charging threshold, a second charging cut-off SOC is obtained, where second charging cut-off SOC is an SOC at which the charging of the battery is cut off and is used by the vehicle control unit.

The charging cut-off SOC values of the vehicle control unit under different conditions are compared with an actual SOC of the battery to determine whether to maintain the charging through the vehicle control unit. That is, during the charging operation performed by the vehicle control unit on the battery, the second charging cut-off SOC is compared with the SOC of the battery, and based on the comparison result, the charging operation performed by the vehicle control unit on the battery is controlled.

When the charging cut-off SOC of the vehicle control unit is reached, the battery continuously discharges, and it is determined whether the battery satisfies the recharging condition after the discharging. In a case where the condition is satisfied, the charging through the vehicle control unit is started; otherwise, the charging through the vehicle control unit is not started. That is, in response to the vehicle control unit stopping the charging the battery, controlling the battery to continuously discharge; determining whether the battery satisfies a recharging condition after discharging; and in response to the condition being satisfied, the battery is charged through the vehicle control unit.

In a case where the module/unit integrated into the electronic device 100 is implemented as a software functional unit and sold or used as a standalone product, it can be stored in a computer-readable storage medium. Based on this understanding, in the present disclosure, all or part of the processes in the methods of the above embodiments may be performed, or may be performed by instructing relevant hardware through a computer program. The computer program may be stored in a computer-readable storage medium, and when run by a processor, the computer program may perform the steps of the various method embodiments described above. The computer program includes computer program code, which can be in the form of source code, object code, runnable files, or some intermediate form. Computer-readable media may include any entity or device capable of carrying computer program code, recording media, USB flash drives, mobile hard disks, magnetic disks, optical disks, computer memories, and read-only memories (ROM).

Those skilled in the art should understand that the embodiments of the present disclosure may be implemented as a method, a system, or a computer program product. Therefore, the present disclosure may take the form of an entirely hardware embodiment, an entirely software embodiment, or an embodiment combining both hardware and software aspects. Furthermore, the present disclosure may take the form of a computer program product implemented on one or more computer-usable storage media (including but not limited to disk storage, CD-ROM, optical storage, etc.) containing computer-usable program code.

The present disclosure is described with reference to flowcharts and/or block diagrams of methods, apparatuses (systems), and computer program products according to the embodiments of the present disclosure. It should be understood that each process and/or block in the flowcharts and/or block diagrams, as well as combinations of processes and/or blocks in the flowcharts and/or block diagrams, can be implemented by computer program instructions. These computer program instructions can be provided to a processor of a general-purpose computer, a special-purpose computer, an embedded processor, or other programmable data processing device to produce a machine, such that instructions run by the processor of the computer or other programmable data processing device produce an apparatus for implementing the functions specified in one or more processes of the flowcharts and/or one or more blocks of the block diagrams.

These computer program instructions can also be stored in a computer-readable memory that can guide a computer or other programmable data processing device to work in a specific manner, such that the instructions stored in the computer-readable memory produce a manufactured product including an instruction device, which implements the functions specified in one or more processes of a flowchart and/or one or more blocks of a block diagram.

These computer program instructions can also be loaded onto a computer or other programmable data processing device, enabling a series of operational steps to be run on the computer or other programmable device to produce computer-implemented processing. Thus, the instructions run on the computer or other programmable device provide steps for implementing the functions specified in one or more processes of the flowchart and/or one or more blocks of the block diagram.

It should be noted that the above embodiments are only used to illustrate the technical solutions of the present disclosure and are not intended to limit it. Although the present disclosure is described in detail with reference to the above embodiments, those skilled in the art should understand that modifications or equivalent substitutions can still be made to the specific embodiments of the present disclosure. Any modifications or equivalent substitutions that do not deviate from the spirit and scope of the present disclosure shall be covered within the protection scope of the claims of the present disclosure.

## Claims

1. A charging control method for an electric vehicle, performed by the electric vehicle, wherein the electric vehicle comprises a vehicle control unit and a battery, and the method comprises:
receiving a first charging cut-off state of charge (SOC), wherein the first charging cut-off SOC is an SOC at which charging of the battery is cut off and is configured via an instrument panel;
obtaining indication information based on the first charging cut-off SOC, wherein the indication information indicates whether the first charging cut-off SOC is valid;
obtaining a second charging cut-off SOC based on the first charging cut-off SOC, the indication information and a charging threshold, wherein the second charging cut-off SOC is an SOC at which charging of the battery is cut off and is used by the vehicle control unit;
comparing the second charging cut-off SOC with an SOC of the battery during a charging operation performed by the vehicle control unit on the battery; and controlling, based on a comparison result, the charging operation performed by the vehicle control unit on the battery; and
controlling the battery to enter a continuous discharging state in response to the vehicle control unit stopping the charging operation on the battery; determining whether the battery satisfies a recharging condition after discharging; and charging the battery via the vehicle control unit in response to the condition being satisfied.

2. The method according to claim 1, wherein obtaining the second charging cut-off SOC based on the first charging cut-off SOC, the indication information and the charging threshold comprises:
obtaining, in response to the indication information indicating that the first charging cut-off SOC is invalid, a second charging cut-off SOC corresponding to a case where the first charging cut-off SOC is invalid; or
determining, in response to the indication information indicating that the first charging cut-off SOC is valid, whether the first charging cut-off SOC is greater than the charging threshold; obtaining, in response to the first charging cut-off SOC being less than the charging threshold, a second charging cut-off SOC corresponding to a case where the first charging cut-off SOC is less than the charging threshold; and obtaining, in response to the first charging cut-off SOC being greater than the charging threshold and based on the first charging cut-off SOC, a second charging cut-off SOC corresponding to a case where the first charging cut-off SOC is greater than the charging threshold.

3. The method according to claim 2, wherein the indication information comprises: first indication information indicating that the first charging cut-off SOC is invalid, and second indication information indicating that the first charging cut-off SOC is valid,
wherein obtaining the indication information based on the first charging cut-off SOC comprises: obtaining the first indication information in response to a signal of the first charging cut-off SOC being 0x0:Not_Active, 0xFE:Abnormal, or 0xFF:Invalid; and
wherein obtaining, in response to the indication information indicating that the first charging cut-off SOC is invalid, the second charging cut-off SOC corresponding to the case where the first charging cut-off SOC is invalid comprises: determining a memorized value as the second charging cut-off SOC in response to obtaining the first indication information, wherein the memorized value is a charging cut-off SOC received by the vehicle control unit in a previous ignition cycle.

4. The method according to claim 2, wherein obtaining, in response to the first charging cut-off SOC being less than the charging threshold, the second charging cut-off SOC corresponding to the case where the first charging cut-off SOC is less than the charging threshold comprises:
determining a default value or a memorized value as the second charging cut-off SOC in response to the first charging cut-off SOC being less than the charging threshold, wherein the default value is a factory-preset charging cut-off SOC, and the memorized value is a charging cut-off SOC received by the vehicle control unit in a previous ignition cycle.

5. The method according to claim 2, wherein obtaining, based on the first charging cut-off SOC, the second charging cut-off SOC corresponding to the case where the first charging cut-off SOC is greater than the charging threshold comprises:
determining a sum of the first charging cut-off SOC and 0.9 as the second charging cut-off SOC in response to the first charging cut-off SOC being less than 99;
determining a sum of the first charging cut-off SOC and 0.4 as the second charging cut-off SOC in response to the first charging cut-off SOC being 99; or
determining the first charging cut-off SOC as the second charging cut-off SOC in response to the first charging cut-off SOC being 100.

6. The method according to claim 1, wherein controlling, based on the comparison result, the charging operation performed by the vehicle control unit on the battery comprises:
maintaining, by the vehicle control unit, the charging operation on the battery in response to the second charging cut-off SOC being greater than the SOC of the battery; or
stopping, by the vehicle control unit, the charging operation on the battery in response to the second charging cut-off SOC being not greater than the SOC of the battery.

7. The method according to claim 1, wherein determining whether the battery satisfies the recharging condition after the discharging comprises:
in response to the charging gun being not unplugged and the vehicle control unit being not in a sleep state:
determining, by the vehicle control unit, whether the battery satisfies the recharging condition in response to the SOC of the battery being not greater than a difference between the first charging cut-off SOC and 0.9; and refraining from responding, by the vehicle control unit, to a charging request in response to the SOC of the battery being greater than the difference between the first charging cut-off SOC and 0.9; and
in response to the charging gun being re-plugged or the vehicle control unit being awakened from the sleep state:
determining, by the vehicle control unit, whether the battery satisfies the recharging condition in response to the SOC of the battery being less than the first charging cut-off SOC.

8. The method according to claim 7, wherein determining, by the vehicle control unit, whether the battery satisfies the recharging condition comprises:
obtaining the indication information based on the first charging cut-off SOC;
obtaining the second charging cut-off SOC based on the first charging cut-off SOC, the indication information and the charging threshold; and
comparing the second charging cut-off SOC with the SOC of the battery, and controlling, based on the comparison result, the charging operation performed by the vehicle control unit on the battery.

9. A charging control system for an electric vehicle, comprising:
an information receiving module, configured to receive a first charging cut-off state of charge (SOC), wherein the first charging cut-off SOC is an SOC at which charging of the battery is cut off and is configured via an instrument panel;
a first determining module, configured to: based on the first charging cut-off SOC, obtain indication information indicating whether the first charging cut-off SOC is valid; and based on the first charging cut-off SOC, the indication information and a charging threshold, obtain a second charging cut-off SOC, wherein the second charging cut-off SOC is an SOC at which charging of the battery is cut off and is used by the vehicle control unit;
a second determining module, configured to: compare the second charging cut-off SOC with an SOC of the battery during a charging operation performed by the vehicle control unit on the battery; and based on a comparison result, control the charging operation performed by the vehicle control unit on the battery; and
a third determining module, configured to: in response to the vehicle control unit stopping the charging operation on the battery, control the battery to enter a continuous discharging state; determine whether the battery satisfies a recharging condition after discharging; and in response to the battery satisfying the recharging condition, charge the battery via the vehicle control unit.

10. A terminal device comprising: a memory, a processor, and a computer program stored in the memory and runnable on the processor, wherein the processor, when running the computer program, is configured to perform steps of the charging control method as defined in any one of claims 1 to 8.
